(19) Europäisches Patentamt
European Patent Office
Office européen des brevets

(11) **EP 2 469 290 A2**

(12) **EUROPÄISCHE PATENTANMELDUNG**

(43) Veröffentlichungstag:
**27.06.2012 Patentblatt 2012/26**

(51) Int Cl.:
***G01S 3/784*** *(2006.01)*  ***H01L 25/00*** *(2006.01)*
***G01S 3/786*** *(2006.01)*

(21) Anmeldenummer: **11194849.3**

(22) Anmeldetag: **21.12.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **23.12.2010 DE 102010064140**

(71) Anmelder: **Silicon Micro Sensors GmbH**
**01099 Dresden (DE)**

(72) Erfinder:
• **Busse, Erik**
**04600 Altenburg (DE)**
• **Prinz von Hessen, Wilhelm**
**01445 Radebeul (DE)**

(74) Vertreter: **Lippert, Stachow & Partner**
**Patentanwälte**
**Krenkelstrasse 3**
**01309 Dresden (DE)**

(54) **Strahlungsrichtungssensor und Verfahren zur Ermittlung des Einfallswinkels einer Strahlungsquelle**

(57) Die Erfindung betrifft einen Strahlungsrichtungssensor 1 sowie ein entsprechendes Verfahren zur Bestimmung des Einfallswinkels einer Strahlungsquelle. Ein dafür geeigneter Strahlungsrichtungssensor 1 weist in einer Halbleiterschicht 6 eine Diodenanordnung 5 von Avalanche-Fotodioden 4 und eine anwendungsspezifische, integrierte Schaltung, eine Distanzschicht 8, eine darauf befindliche Blendenstruktur 9 sowie Mittel zur elektrischen Anbindung des Strahlungsrichtungssensors 1 auf, wobei diese direkt übereinanderliegenden Schichten und Strukturen in Ihrer Form, Größe bzw. Dicke aufeinander abgestimmt sind. Ein entsprechendes Mess- und Auswerteverfahren wird angegeben.

FIG 1

EP 2 469 290 A2

**Beschreibung**

Die Erfindung betrifft einen Strahlungsrichtungssensor sowie ein entsprechendes Verfahren zur Bestimmung des Einfallswinkels einer Strahlungsquelle.

Die Bestimmung der Position von Strahlungsquellen, insbesondere der Position der Sonne, in Azimut als auch im Höhenwinkel ist eine immer wieder bestehende Aufgabe, für deren Realisierung verschiedenste Vorrichtungen eingesetzt wurden und werden, bei denen man sich entweder unterschiedliche Transmissivität von Materialien für die entsprechende Strahlung oder die Beugung bzw. Brechung der zu messenden Strahlung in optisch aktiven Materialen oder eine Kombination davon zunutze macht.

Um die Positionsdaten von Strahlungsquellen technisch nutzen zu können, bedarf es dazu Vorrichtungen und Verfahren, die eine entsprechende Präzision der Messung wie auch eine einfache und automatische Verarbeitbarkeit der ermittelten Daten bieten. Anwendungsgebiete für die technische Nutzung dieser Daten sind dabei beispielsweise die Automobilindustrie oder die Gebäudetechnik.

Die meisten der zum heutigen Zeitpunkt technisch dafür genutzten Vorrichtungen enthalten hierzu zunächst drei Hauptbestandteile: eine fotosensible Fläche zur ortsaufgelösten Detektion der Strahlung, eine Einrichtung zur Modifikation der einfallenden Strahlung und eine Einheit zur Aufbereitung der Daten.

Die Vorrichtungen nach dem Stand der Technik bieten dabei keine vollintegrierten Lösungen, sondern bestehen aus separaten Teilen.

Nachdem in älteren Lösungen die fotosensible Fläche durch Anordnungen von separaten, durchaus auch räumlich verteilten Fotoelementen realisiert wurde, setzten sich im folgenden Lösungen durch, bei denen die fotosensible Fläche aus einem Sensorarray besteht, d.h. aus einer regelmäßigen Anordnung von lichtempfindlichen Bauelementen, über die durch die Feststellung, ob ein photoneninduzierter Strom fließt oder nicht, die Einfallsrichtung der Strahlung bestimmt wird. Die WO 94/17427 beschreibt ein solches Sensorarray, in dem jedoch die einzelnen Zellen nur digitale Antworten liefern. Damit ist die Auflösung dieser Strahlungsrichtungssensoren durch den Abstand der einzelnen Zellen im Sensorarray bestimmt. Mit entsprechenden optischen Mitteln wie Sammellinsen wird die Auflösung etwas verbessert, zudem wird die Verwendung eines CCD-Bildsensors vorgeschlagen. Die Verwendung von separaten optischen Hilfsmitteln wie Linsen erlaubt es jedoch nicht, den Strahlungsrichtungssensor kompakt zu gestalten.

Zudem ist es bei der Verwendung von Anordnungen fotosensibler Zellen nachteilig, wenn die fotosensiblen Zellen digital ausgelesen werden. Eine höhere Auflösung ist zu erreichen, wenn man die in den fotosensiblen Zellen erzeugten Fotoströme analog auslesen und bewerten kann. Aufgrund der sehr geringen Ströme bedarf es für eine Detektion der Analogdaten jedoch relativ großer Flächen bzw. der Nutzung von Fotozellenarrays, um die Störanfälligkeit der Messung zu verringern.

Bei den bekannten Systemen besitzt ein solcher Strahlungsrichtungssensor einen komplizierten Aufbau und erfordert eine größere Fläche sowie eine aufwendige Auswertung.

Aufgabe der Erfindung ist es somit, eine Vorrichtung zur Bestimmung des Einfallswinkels einer Strahlungsquelle zu schaffen, die leicht integrierbar in die Geräte und Einrichtungen ihres jeweiligen Einsatzgebiets ist, einen sehr einfachen Aufbau aufweist und trotz hoher räumlicher Auflösbarkeit den Aufwand für die Auswertung minimiert. Desweiteren soll ein Verfahren angegeben werden, um mit einer solchen Vorrichtung den Einfallswinkel, d.h., sowohl den Azimut $\alpha$ als auch den Höhenwinkel $\beta$ der einfallenden Strahlung einer Strahlungsquelle zu bestimmen.

Diese Aufgabe wird gelöst durch einen Strahlungsrichtungssensor zur Bestimmung des Einfallswinkels einer Strahlungsquelle mit den Merkmalen des Anspruches 1 und ein Verfahren zur Bestimmung des Einfallswinkels mit den Merkmalen des Anspruchs 12. Die Ansprüche 2 bis 11 und 13 bis 16 geben Ausführungsvarianten dieser erfindungsgemäßen Lösung wieder.

Der Strahlungsrichtungssensor enthält dabei in einer Halbleiterschicht eine Halbleiter-Fotodiodenanordnung, die in ihrer Gesamtheit einen positionsempfindlichen Detektor (PSD - Position Sensitive Detector) bildet, d.h. einen Detektor, der es durch den Aufbau und die Lage seiner Elemente gestattet, auf die Lage des zu detektierenden Signals zu schließen. Dabei zeichnet sich die Diodenanordnung dadurch aus, dass Avalanche-Fotodioden (auch Lawinenfotodioden genannt) als Halbleiterfotodioden genutzt werden. In Lawinenfotodioden reicht ein einzelnes Photon, um ein Elektron freizusetzen. Dieses wiederum löst durch die Beschleunigung durch ein Feld hoher Feldstärke in der Sperrschicht einen Lawineneffekt aus. Die Stoßionisation führt zur weiteren Ladungsgeneration. Dadurch findet eine Verstärkung des Effekts um ein bis zu mehr als Hundertfaches statt. Durch diesen inneren Verstärkungseffekt ist es folglich möglich, auch sehr geringe Strahlungsänderungen zu detektieren. Dadurch ist es wiederum möglich, geringste Änderungen der einfallenden Strahlung auf der aktiven Fläche jeder der Avalanche-Fotodioden zu detektieren, die auf eine Änderung des Einfallswinkels der Strahlung zurückzuführen sind, da diese durch den Lawineneffekt entsprechend verstärkt werden.

Dies ermöglicht es, den Sensor entscheidend sowohl in lateraler Richtung als auch in seiner Gesamthöhe zu verkleinern, denn um eine vergleichbare Einfallswinkeländerung wie bei Sensoren nach dem Stand der Technik gleichermaßen detektieren zu können, genügt aufgrund des Verstärkungseffekts eine wesentlich kleinere Änderung der bestrahlten Fläche.

Ebenfalls in dieser bzw. in einer vergleichbaren Halbleiterschicht enthält der erfindungsgemäße Strahlungsrichtungssensor eine anwendungsspezifische integrierte Schaltung zur Erzeugung von linear auswertbaren, analogen Ausgangssignalen. Diese ermöglicht die interne Steuerung des Strahlungsrichtungssensors während der durchzuführenden Messung, die Aufarbeitung und Umwandlung der gemessenen Signale und die Bereitstellung weniger, einfacher und weiterverwertbarer Ausgangssignale als dem Strahlungsrichtungssensor. Im erfindungsgemäßen Strahlungssensor sind dies zur Garantie der Hauptfunktion, d.h., zur Ermittlung des Einfallswinkels der Strahlung, zwei Ausgangsspannungen, die die Position des geometrischen Schwerpunkts der einfallenden Strahlung kennzeichnen. Selbstverständlich können aber in weiteren Ausführungsformen des erfindungsgemäßen Strahlungssensors weitere Ausgangssignale hinzukommen.

Auf der Halbleiterschicht befindet sich eine transparente zweite Schicht, die zur Einstellung eines definierten Abstands zwischen der Halbleiterschicht, die die den positionsempfindlichen Detektor bildenden Avalanche-Fotodioden enthält, und einer darüber liegenden Blendenstruktur, die entsprechend der Einfallswinkels der einfallenden Strahlung auf dem positionsempfindlichen Detektor abgebildet wird, dient. Diese transparente zweite Schicht wird nachfolgend als Distanzschicht bezeichnet.

Auf dieser transparenten Distanzschicht befindet sich schließlich eine Blendenstruktur, die als eine definierte Öffnung in einer nichttransparenten Schicht ausgebildet ist, wobei die Öffnung derart über der Diodenanordnung angeordnet und in ihrer Form und Größe derart an die Form und Größe der Diodenanordnung sowie die Dicke der Distanzschicht angepasst ist, dass die Öffnung stets in einer vom Einfallswinkel der Strahlung abhängigen Position auf der Diodenanordnung abbildbar ist. Es wird also durch die Abstimmung von der Form, Größe und Lage der Diodenstruktur, der Dicke der Distanzschicht und der Form und Größe der Blendenöffnung gewährleistet, dass sowohl bei einem Höhenwinkel der einfallenden Strahlung von 90° (also bei senkrechten Einfall) als auch bei Höhenwinkeln nahe 0° (wobei 0° selbst nicht erreicht werden kann) sowie aus jeglichem Azimut eine Abbildung der durch die Blende hindurchdringenden einfallenden Strahlung so auf einem Teil der Diodenanordnung möglich ist, dass daraus eine Position des geometrischen Strahlungsschwerpunkts dieser einfallenden Strahlung möglich ist.

Um den Strahlungsrichtungssensor elektrisch anschließen zu können und ein Auslesen der Daten des Strahlungsrichtungssensors an andere externe Auswerte- und Steuerelemente zu ermöglichen, enthält der Strahlungsrichtungssensor weiterhin noch Mittel zur elektrischen Anbindung, d.h. kontaktierbare Bereiche wie z.B. Kontaktpads.

Günstigerweise besteht dabei der positionsempfindliche Detektor aus n Paaren von Avalanche-Fotodioden mit n = 1, 2, 3 usw., die derart angeordnet sind, dass die Avalanche-Fotodioden spiegelsymmetrisch in Bezug auf die beiden Achsen X und Y, die, üblicherweise rechtwinklig zueinander liegend. die Ebene der Fotodiodenanordnung aufspannen, liegen, und dass die Blendenstruktur in Abhängigkeit vom Einfallswinkel der Strahlung jeweils partiell auf den Avalanche-Fotodioden dieser Diodenanordnung abbildbar ist. Da die Position des geometrischen Schwerpunkts der durch die Blende auf die Diodenanordnung einfallenden Strahlung durch eine Differenzbildung der aus den jeweiligen Fotoströmen erhaltenen Spannungen beiderseits der beiden Achsen X bzw. Y bestimmt wird, ist einerseits eine spiegelsymmetrische Gleichheit der Diodenanordnung auf jeder Seite einer Achse von Vorteil. Zudem dürfen immer nur diejenigen Avalanche-Fotodioden in die Berechnung einbezogen werden, die eindeutig auf der einen oder auf der anderen Seite der jeweils betrachteten Achse liegen.

Dabei ist es besonders vorteilhaft, wenn jede der paarweise angeordneten Avalanche-Fotodioden in einem von 2n Sektoren der Diodenanordnung angeordnet ist, welche sich radial und gleichmäßig verteilt um den geometrischen Mittelpunkt der Diodenanordnung herum erstrecken, und wobei diese Avalanche-Fotodioden über einen schmalen, isolierenden Stegbereich getrennte, optisch aktive Flächen gleicher Form, gleichen Flächeninhalts und gleichen Abstands vom Mittelpunkt der Diodenanordnung aufweisen, da dies gestattet, die für die Diodenanordnung vorhandene Fläche besonders effizient zu nutzen und die Berechnung der Position der einfallenden Strahlung weiter zu vereinfachen.

In einer besonders einfachen und daher günstigen Ausführung enthält der Strahlungsrichtungssensor entsprechend vier Avalanche-Fotodioden, von denen jeweils eine in einem Quadranten der Diodenanordnung angeordnet ist und die in der Draufsicht eine Grundform haben, die sich zusammensetzt aus einem gleichseitigen Dreieck der Kantenlänge a und einem sich an eine Kantenlänge a des Dreiecks anschließendem Rechteck der Kantenlängen a und $\sqrt{3}/2 * a$. Zudem sollen diese vier Avalanche-Fotodioden erfindungsgemäß so zueinander angeordnet sein, dass jeweils die freien Spitzen der gleichseitigen Dreiecke zueinander zeigen und die Spitzen einen solchen Abstand voneinander haben, dass ein elektrischer Durchbruch von einer Avalanche-Fotodiode zur anderen unmöglich ist. Dies erlaubt einerseits eine besonders gute Flächenausnutzung der Diodenanordnung sowie eine besonders einfache Auswertung der aus den vier Fotoströmen erhaltenen Spannungen, bei deren Auswertung bezüglich der verwendeten Dioden keine geometrischen Formfaktoren nötig sind. Diese Anordnung wird auch Anordnung von Quadranten-Fotodioden genannt.

Durch eine entsprechende Ausgestaltung der zur Bestimmung der Strahlungsrichtung verwendeten Avalanche-FotodiodenAnordnung und einer dazu passenden Wahl der Öffnung der Blendenstruktur ist es in einer vorteilhaften Ausgestaltung des erfindungsgemäßen Strahlungsrichtungssensors möglich, die Summenintensität der einfallenden Strahlung zu bestimmen. Für diesen Fall ist diese Anordnung so gestaltet, dass stets eine inhaltlich vergleichbare Gesamtfläche aller Avalanche-Fotodioden durch die durch die Blende einfallende Strahlung bestrahlt wird. Damit ist es möglich, auf ein und denselben Sensorchip sowohl den Einfallswinkel einer Strahlung als auch deren Intensität zu messen.

Besonders dienlich für die Bestimmung einer objektiven Helligkeit der einfallenden Strahlung für den Fall, dass der Strahlungsrichtungssensor über Mittel zur zusätzlichen Bestimmung der Strahlungsintensität verfügen soll, ist es, wenn der erfindungsgemäße Strahlungsrichtungssensor zusätzlich zu den Dioden des positionsempfindlichen Detektors einen Dämmerungssensor enthält. Dieser Dämmerungssensor misst die objektive Helligkeit der Umgebungsstrahlung, die auch als Störstrahlung bezeichnet werden kann. Damit ist die Bestimmung einer absoluten Strahlungsintensität der einfallenden Strahlung möglich, die von Umgebungseinflüssen abstrahiert.

Der Dämmerungssensor ist dabei in einer vorteilhaften Ausführung mit einem Blaufilter versehen. Aus der Berücksichtigung seines Signals sowie der Summenintensität des rotempfindlichen positionsempfindlichen Detektors lässt sich in Folge die objektive Helligkeit bestimmen.

Die Nutzung einer empfindungsgemäßen Lösung, die alle lichtempfindlichen Elemente monolithisch auf einem Halbleiterchip integriert, ermöglicht es hierbei, die Größe des Strahlungsrichtungssensors weiter zu minimieren. Damit kann der Sensor äußerst platzsparend eingebaut werden, ggf. auch in einem System, das bereits andere Sensoren enthält, hinzugefügt werden.

Zwei jeweils für Ihre Zwecke besonders günstige Ausführungen der empfindungsgemäßen Lösung sind dabei der Strahlungsrichtungssensor mit monolithisch auf einem Halbleiterchip integrierten lichtempfindlichen Elementen, wie der Avalanche-Fotodioden und ggf dem Dämmerungssensor, der anwendungsspezifischen, integrierten Schaltung und der als Kontakte ausgebildeten Mittel zur elektrischen Verbindung. Diese Einchip-Lösung ermöglicht eine sehr einfache Herstellung.

Werden hingegen die lichtempfindlichen Elemente auf einem ersten und die anwendungsspezifische, integrierte Schaltung auf einem zweiten Halbleiterchip angeordnet, wobei der der zweite Halbleiterchip zum ersten Halbleiterchip dreidimensional derart integriert ist, dass er sich unter dem ersten befindet und von dem ersten Chip aus kontaktiert wird erlaubt dies eine nochmalige Verkleinerung des Strahlungsrichtungssensors in Länge und Breite. Bei dieser Lösung können die Mittel zur elektrischen Anbindung auf dem ersten und/oder auf dem zweiten Halbleiterchip angeordnet sein, wobei eine Anordnung auf dem ersten, oberen Chip eine Kontaktierung durch die Nutzung von Kontaktpads erheblich erleichtert, während eine Anordnung auf dem unteren Chip Mittel zur Herausführung der entsprechenden elektrischen Anbindung an die Chipkanten bzw. über diese hinaus erfordert.

Eine einfache Möglichkeit der Ausführung der transparenten Distanzschicht ist die Nutzung einer Glasschicht, die anodisch auf die Halbleiterschicht gebondet ist. Optimal ist dabei die Nutzung von Borsilikat 33 oder Pyrex als Glasmaterial. Beide Materialien sind für das anodische Bonden auf Halbleitermaterial, insbesondere auf Silizium optimiert.

Die Blendenstruktur, die direkt auf der transparenten Distanzschicht angeordnet wird, wird mikrosystemtechnisch realisiert durch eine Öffnung in einer nichttransparenten Schicht, die während der Diodenherstellung mit fotolithographischen Mitteln zur Diodenfläche positioniert wird. Dazu können Positionierungsmarken des Halbleiterwafers genutzt werden, auf dem die Diodenstrukturen und die anwendungsspezifischen Schaltungen zur Auswertung der Diodensignale realisiert werden. Eine derartige Positionierung gewährleistet eine wesentlich höhere Präzision als die Aufbringung von Schattenmasken nach dem Stand der Technik als separate Bauteile.

Eine quadratische, auf die Größe und die Anordnung der Avalanche-Fotodioden des positionsempfindlichen Detektors abgestimmte Öffnung der Blendenstruktur gewährleistet dabei eine einfache Positionsberechnung und ggf. auch eine einfache Bestimmung der Summenintensität, bei der der Einfluss von Störgrößen minimiert werden kann.

Der Strahlungsensor kann zu seinem Schutze vor mechanischen Einwirkungen sowie klimatischen Einflüssen wie Feuchtigkeit vorteilhafterweise ein Gehäuse aufweisen. Dieses Gehäuse oder aber mindestens der Teil des Gehäuses, der sich oberhalb der Fotodioden befindet, ist dabei transparent ausgeführt. Ein hierfür günstigerweise zu verwendendes Material ist Makrolon oder Aspec.

Das Verfahren, durch das mit einen Strahlungsrichtungssensor wie den oben beschriebenen der Einfallswinkel und/oder die Strahlungsintensität einer Strahlungsquelle bestimmt werden kann, ist im Folgenden beschrieben.

Sowohl die Dioden des positionsempfindlichen Detektors als auch ggf. des Dämmerungssensors des erfindungsgemäßen Strahlungsrichtungssensors werden im fotovoltaischen Regime betrieben, d.h. es wird keine Bias-Spannung angelegt.

Die Photonen der Strahlungsquelle, die durch die Öffnung der Blendenstruktur hindurch auf die Anordnung von Fotodioden des Strahlungsrichtungssensors gelangen, erzeugen dort einen Fotostrom. Durch den speziellen Aufbau der Dioden des positionsempfindlichen Detektors als Avalanche-Fotodioden werden während der Umwandlung der Photonen in einen Fotostrom durch Stoßionisation weitere Ladungsträger generiert. Diese verstärken das Signal der einfallenden Photonen um ein mehr als Hundertfaches. Dadurch werden auch geringe Veränderungen detektierbar.

Diese in den Avalanche-Fotodioden erzeugten Fotoströme, die aufgrund des Betriebs dieser Fotodioden in einem entsprechenden Modus proportional zu der bestrahlten Fläche der Dioden und der Strahlungsintensität der einfallenden Strahlung sind, werden in Spannungen umgewandelt. Dies kann mittels Transimpedanzverstärkern erfolgen.

Durch die Umwandlung der Fotoströme der einzelnen Fotodioden in den Fotoströmen äquivalente Spannung ist im Folgenden eine Erzeugung von sowohl intern als auch extern gut weiterverarbeitbaren Ausgangssignalen möglich. Damit berechnet sich die Position (x,y) des geometrischen Schwerpunkts der einfallenden Strahlung jeweils aus dem Quotienten der Differenzen und der Summen der in der entsprechenden Richtung x und y beiderseits der beiden Achsen X bzw. Y berechneten, den jeweiligen Fotoströmen entsprechenden Spannungen.

Mittels dieser Werte werden im Strahlungsrichtungssensor zwei kontinuierliche, elektrische Signale $A_x$ und $A_y$ erzeugt, die der Position des geometrischen Schwerpunkts (x,y) der Strahlung auf dem positionsempfindlichen Detektor entsprechen. Dabei ist $A_x$ die Position des geometrischen Strahlungsschwerpunkts in x-Richtung und $A_y$ die Position des geometrischen Strahlungsschwerpunkts in y-Richtung. Da es sich hier um analoge Ausgangssignale, d.h. kontinuierliche Daten, handelt, garantieren sie eine hohe Positionsauflösung sowie eine entsprechende Präzision der daraus berechneten Daten bei der Weiterverarbeitung.

Aus der Kenntnis des geometrischen Schwerpunkts (x,y) der einfallenden Strahlung, charakterisiert durch die elektrischen Signale ($A_x$, $A_y$), kann dann wiederum die Berechnung des Azimuts und des Höhenwinkels erfolgen. Hierzu werden entsprechende Tangensbeziehungen angewendet.

In einer besonders vorteilhaften, da sehr einfach gestalteten Ausführung des Verfahrens, bei dem ein erfindungsgemäßer Strahlungsrichtungssensor mit einem positionsempfindlichen Detektor, der vier Avalanche-Fotodioden aufweist, eingesetzt wird, erfolgt das konkrete Verfahren der Bestimmung des Einfallswinkels einer Strahlungsquelle wie folgt:

Zur Vermeidung der Verzerrung der Feldlinien und damit von Nichtlinearitäten, wie es beim gleichzeitigen Auslesen der z.B. durch Transimpedanzverstärker in Spannungen umgewandelten Fotoströme aller Fotodioden des positionsempfindlichen Detektors geschehen kann, werden jeweils gegenüberliegende Dioden gleichzeitig beschaltet, während die anderen floatend belassen werden. Nach einer Stabilisierungsphase werden diese beschalteten Dioden ausgelesen und ihre Spannungswerte $U_1$ und $U_3$ gespeichert.

Im Anschluss wird das nächste Paar sich gegenüberliegender Dioden gleichzeitig beschaltet, während wiederum die verbleibenden Dioden floatend belassen werden. Wiederum werden nach einer Stabilisierungsphase diese beschalteten Dioden ausgelesen und ihre Spannungswerte $U_2$ und $U_4$ gespeichert.

Wiederum für den bevorzugten Aufbau des positionsempfindlichen Detektors mit Hilfe von vier Fotodioden berechnen sich das elektrische Signal der Position x und y des Schwerpunkts der einfallenden Strahlung nach $x = (U_{III} - U_I) / (U_I + U_{III})$ und $y = (U_{II} - U_{IV}) / (U_{II} + U_{IV})$.

Wie aus der Formel ersichtlich, können dabei x und y jeweils Werte zwischen -1 und 1 annehmen. Durch anschließende Berechnung der elektrischen Ausgangssignale $A_x$ und $A_y$ nach

$$A_x \ = \ (x+1) \ * \ (U_{max}-U_{min})/2 \ + \ U_{min} \ \text{und}$$

$$A_y \ = \ (y+1) \ * \ (U_{max}-U_{min})/2 \ + \ U_{min},$$

wobei $U_{max}$ und $U_{min}$ die obere und die untere Grenze der jeweils zulässige Spannungen der elektrischen Ausgangssignale kennzeichnen, können damit analoge Werte erzeugt werden, die die Position der einfallenden Strahlung eindeutig charakterisieren, sich jedoch in festen Grenzen ($U_{min}...U_{max}$) bewegen und ihr Vorzeichen nicht ändern, was Ihre Weitergabe z.B. an externe Auswerte- und Steuereinheiten erheblich erleichtert.

Mit diesen elektrischen Ausgangssignalen ist nun die Berechnung des Azimuts $\alpha$ und des Höhenwinkels $\beta$ nach

$$\alpha = \arctan \frac{2Ay - U\min - U\max}{2Ax - U\min - U\max}$$

$$\beta = \arctan \frac{1}{\sqrt{\left(\dfrac{2(Ax - U\min)}{U\max - U\min} - 1\right)^2 + \left(\dfrac{2(Ay - U\min)}{U\max - U\min} - 1\right)^2}}$$

Möglich. Diese Berechnung soll in der Regel in einer externen Auswerteeinheit erfolgen, was jedoch die Möglichkeit, diese Werte auch intern, d.h. im Strahlungsrichtungssensor, zu erzeugen nicht ausschließen soll.

Desweiteren kann in einer vorteilhaften Ausführung eine Summenintensität der Strahlung auf dem positionsempfindlichen Detektor ($A_{PSD}$) berechnet werden.

Bei Einsatz eines zusätzlichen Dämmerungssensors auf dem Strahlungsrichtungssensors, der vorteilhafterweise ein Blaufilter besitzt, und dessen gemessene Strahlungsintensität ($A_{blau}$) ist damit auch eine Berechnung einer objektiven Helligkeit einer Strahlungsquelle unter Ausschaltung von Störquellen möglich durch die Berücksichtigung der Ausgangsspannungen $A_{blau}$ und $A_{PSD}$.

Wiederum in einer besonders vorteilhaften Ausführung des Verfahrens, bei dem ein erfindungsgemäßer Strahlungsrichtungssensor mit einem positionsempfindlichen Detektor, der vier Avalanche-Fotodioden aufweist, eingesetzt wird, berechnet sich die Summenintensität der Strahlung konkret nach $A_{PSD} = (U_I + U_{II} + U_{III} + U_{IV})/4$ und/oder die Intensität der Strahlung auf dem Dämmerungssensor 7 nach $A_{blau} = U_{blau}$.

Auch diese Spannungen $A_{PSD}$ und $A_{blau}$ eignen sich hervorragend zur Weitergabe an eine externe Auswerte- und Steuereinheit, da sie sich wiederum in festen Grenzen bewegen und ihr Vorzeichen nicht ändern.

Die Erfindung soll nachfolgend anhand eines Ausführungsbeispiels eines als Sonnensensor genutzten Strahlungssensors, der den aktuellen Sonnenstand in beiden Raumrichtungen detektiert und zudem auf Wunsch auch Informationen zur Strahlungsintensität der einfallenden Sonnenstrahlung liefert, näher erläutert werden. Dabei wird gleichermaßen die beispielhafte Anordnung als auch das im Beispiel zur Detektion des Einfallswinkels und der Strahlungsintensität genutzte Verfahren beschrieben. In den zugehörigen Figuren zeigt

Fig. 1: Strahlungsrichtungssensorchips im Package;

Fig. 2: Strahlungsrichtungssensor in Draufsicht;

Fig. 3: Strahlungsrichtungssensor in Draufsicht mit Blendenstruktur und

Fig. 4: Richtung der beiden Achsen X und Y im Bezug auf die Dioden des positionsempfindlichen Detektors sowie schematische Darstellung der einfallenden Strahlung sowie der erzeugten Fotoströme.

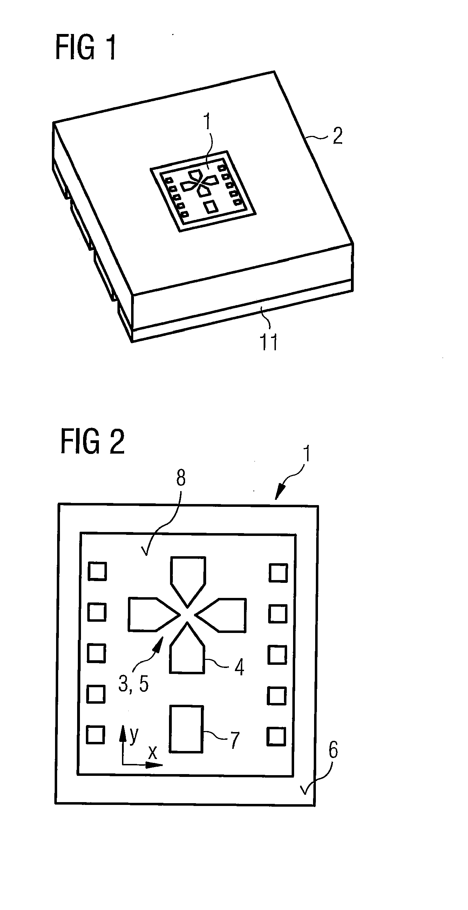

Die Fig. 1 zeigt ein Ausführungsbeispiel eines erfindungsgemäßen Haltleiterchips 11 eines Strahlungsrichtungssensors 1 in seinem Package 2, also in seiner Ummantelung. Dieses Package 2 wird üblicherweise zum Schutz vor mechanischen und klimatischen Einflüssen noch in ein Gehäuse eingebracht, dessen Kappe oberhalb der Fotodioden transparent ausgeführt sein muss. Im Ausführungsbeispiel sei das Gehäuse wahlweise aus Macrolon oder aus Aspec ausgeführt, beides Materialien, die eine ausreichende Transmission aufweisen und ausreichend temperaturbeständig für den Einsatz des Strahlungsrichtungssensors 1 in Kraftfahrzeugen sind.

Der Strahlungsrichtungssensor 1, dargestellt in der Fig. 2, enthält in einer aktiven Halbleiterschicht 6 des Halbleiterchips 11 monolithisch integriert eine Diodenanordnung 5 von vier als Avalanche-Fotodioden 4 ausgeführte Halbleiter-Fotodioden, die in ihrem Zusammenwirken als positionsempfindlicher Detektor 3 genutzt werden, einen Dämmerungssensor 7 sowie eine anwendungsspezifische integrierte Schaltung (in der Fig. 2 nicht sichtbar) zur Erzeugung von auswertbaren, analogen Ausgangssignalen. Durch die Verstärkungswirkung der Avalanche-Fotodioden 4 ist eine Beschränkung der aktiven Fläche der genutzten Dioden auf einen sehr kleinen Bereich möglich. Damit kann die für den Strahlungsrichtungssensor 1 benötigte Fläche wesentlich reduziert werden: Das Ausführungsbeispiel des erfindungsgemäßen Strahlungsrichtungssensors 1 weist beispielhaft, jedoch nicht beschränkend folgende Dimensionen auf: Die Gesamtchipgröße liegt in der Größenordnung von 2,5 * 3,5 mm$^2$; dabei beträgt die aktive Fläche des positionsempfindlichen Detektors 3 zirka 2 * 2 mm$^2$; die Fläche der Blau-Diode 0,5 * 0,5 mm$^2$ sowie die Fläche der Auswerteelektronik zirka 2 mm$^2$. Mit zunehmender Skalierung aber auch in Abhängigkeit vom Einsatzort sind auch noch kleinere Abmessungen möglich.

Der Strahlungsrichtungssensorchip 1 beruht auf der Silizium - PIN-Diodentechnologie, er ist diffusionsstabil bei Fertigungstemperaturen von 300...500°C.

Der positionsempfindliche Detektor 3 besteht im Ausführungsbeispiel aus einer Diodenanordnung 5 von vier Avalanche-Fotodioden 4, deren Grundform sich in der Draufsicht aus einem gleichseitigen Dreieck der Kantenlänge a und einem an eine Kantenlänge a des Dreiecks anschließendem Rechteck der Kantenlängen a und √(3)/2 * a zusammensetzt, was in diesem Fall die optimale Ausnutzung der zur Verfügung stehenden Fläche in Kombination mit der gewählten Blendenöffnung 9 und der Forderung einer einfachen Auswertbarkeit der Messwerte darstellt. Auch hier sind jedoch noch andere Grundformen möglich. Diese vier Avalanche-Fotodioden 4 sind wiederum so zueinander angeordnet, dass jeweils die freien Spitzen der gleichseitigen Dreiecke zueinander zeigen und jede der Avalanche-Fotodioden 4 im Vergleich zur vorherigen um 90° um die freie Dreiecksspitze gedreht ist, wobei die Spitzen wiederum einen solchen Abstand voneinander haben, dass ein elektrischer Durchbruch von einer Diode zur anderen unmöglich ist.

Über der aktiven Halbleiterschicht 6 befindet sich eine transparente Schicht, als Distanzschicht 8 bezeichnet, die im beschriebenen Beispiel wahlweise aus Pyrex oder Borsilikat 33, also speziellen Gläsern, besteht, das anodisch auf die aktive Halbleiterschicht 6, die die oben beschriebenen aktiven Elemente enthält, gebondet wird. Gerade für das System Pyrex bzw. Borsilikat 33 auf Silizium ist dies das Mittel der Wahl, um eine Verbindung herzustellen.

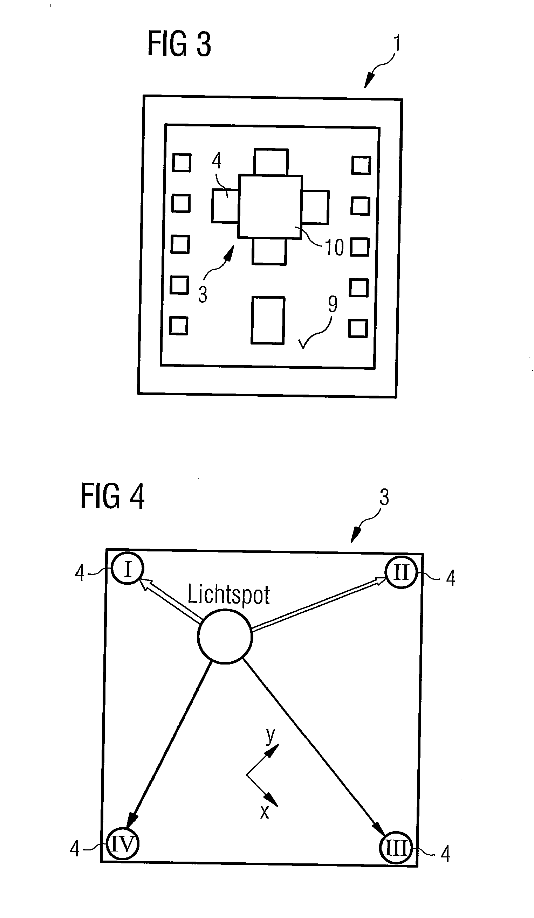

Auf der Distanzchicht 8 befindet sich eine Blendenstruktur 9, wobei über die Dicke der Distanzschicht 8 der Abstand zwischen der Halbleiterschicht 6 und der Blendenstruktur 9 reproduzierbar eingestellt wird. Die Blendenstruktur 9 und insbesondere deren Öffnung 10 oder Öffnungen sind fotolithographisch zu den Diodenflächen des positionsempfindlichen Detektors 3 positioniert. Während des Herstellungsprozesses werden dafür Positionierungsmarken des zur Herstellung des Strahlungsrichtungssensors 1 verwendeten Silizium-Halbleiterwafers genutzt. Die Blendenstruktur 9 enthält im hier beschriebenen Beispiel eine quadratische Öffnung 10 der Kantenlänge a, die sich mittig über dem Schwerpunkt des positionsempfindlichen Detektors 3 befindet, wie in der Fig. 3 dargestellt. Selbstverständlich soll auch diese Blendenstruktur nicht einschränkend aufgefasst werden: Auch hier sind andere Öffnungsformen möglich. Jedoch ist die gewählte Öffnung 10 eine Beispiel für einen Aufbau, der es gestattet, aufgrund der dadurch stets vergleichbaren Größe der bestrahlten aktiven Gesamtfläche der vier Fotodioden 4 des positionsempfindlichen Detektors 3 unabhängig vom Einfallswinkel die Strahlungsintensität der einfallenden Strahlung bestimmt zu können. Die Bestimmung der Strahlungsintensität ist im beschriebenen Beispiel frei von Störsignalen, wie z.B. dem Umgebungslicht, gewünscht. Dazu wird neben den durch einen Transimpedanzverstärker aus den Fotoströmen erzeugten Spannungen der vier Avalanche-Fotodioden 4 des rotempfindlichen positionsempfindlichen Detektors 3, mit denen die Strahlungsintensität der einfallenden Strahlung $A_{PSD} = (U_I + U_{II} + U_{III} + U_{IV})/4$ beschrieben wird, die aus dem Fotostrom des mit einem Blaufilter versehenen Dämmerungssensors 7 erzeugte Spannung $A_{blau} = U_{blau}$ bestimmt, die ein Maß für die Störeinflüsse der Umgebung ist. Der mögliche Spannungsbereich für die Charakterisierung der Strahlungsintensität der einfallenden Strahlung $A_{PSD}$ soll dabei 0,3 bis 3,0V, der mögliche Spannungsbereich für die Charakterisierung der Strahlungsintensität der Störeinflussgrößen $A_{blau}$ soll 0,5 bis 4,5V betragen. Unter Berücksichtigung der Spannung des Dämmerungssensors 7 kann daraus die von Störeinflüssen bereinigte Strahlungsintensität der einfallenden Strahlung angegeben werden.

Für die Bestimmung des Einfallswinkels der Strahlung mit der beispielhaften Anordnung wird durch die über der Diodenanordnung 5 befindliche quadratische Öffnung 9 in der Blendenstruktur hindurch die einfallende Strahlung auf den Avalanche-Fotodioden 4 des positionsempfindlichen Detektors 3 abgebildet. Die auf die Avalanche-Fotodioden 4 auftreffenden Photonen werden dort in einen Fotostrom umgewandelt. Für sich jeweils gegenüberliegende Avalanche-Fotodioden 4 ändert sich aufgrund der sich mit dem Einstrahlungswinkel ändernden Abschattung die jeweils bestrahlten sensitive Fläche und damit der in der jeweiligen Diode generierte Fotostrom, der proportional zur bestrahlten Fläche ist. Schematisch dargestellt ist dies in der Fig. 4.

Das erlaubt wiederum die Ermittlung des geometrischen Schwerpunkts der einfallenden Sonnenstrahlung in den beiden Richtungen x und y als ein Maß für deren Einfallswinkel über die in dieser Diodenanordnung 5 erzeugten Fotoströme der vier Avalanche-Fotodioden 4 mit hoher Präzision. Dabei erfolgt das Auslesen der mittels Transimpedanzverstärker aus den Strömen erzeugten Spannungswerte zur Vermeidung der Verzerrung der Feldlinien, und damit von Nichtlinearitäten, alternierend durch Auslesen von jeweils zwei sich jeweils diagonal gegenüberliegenden Avalanche-Fotodioden 4 wie folgt, wobei die einzelnen Avalanche-Fotodioden 4 als Dioden I bis IV bezeichnet sind:

Zunächst werden die Dioden I und III des positionsempflindlichen Detektors 3 beschaltet, während die Dioden II und IV floatend belassen werden. Nach einer Stabilisierungsphase von 1 ms werden die Dioden I und III ausgelesen und die korrespondierenden Spannungen gespeichert ($U_I$ und $U_{III}$). Anschließend werden die Dioden II und IV des positionsempfindlichen Detektors 3 beschaltet, während die Dioden I und III floatend belassen werden. Nach einer Stabilisierungsphase von 1 ms werden die Dioden II und IV ausgelesen und die korrespondierenden Spannungen gespeichert ($U_{II}$ und $U_{IV}$).

Aus diesen vier Spannungen der Avalanche-Fotodioden 4 des positionsempfindlichen Detektors 3 berechnet sich das elektrische Signal der Position des Schwerpunkts x und y der einfallenden Strahlung nach $x = (U_{III} - U_I)/(U_I + U_{III})$ und $y = (U_{II} - U_{IV})/(U_{II} + U_{IV})$. Aus diesen Positionssignalen, die Werte zwischen -1 und 1 annehmen können, werden unter der Voraussetzung, dass $U_{max}$ als das obere Limit zulässigen Spannungsbereichs 3,0V und $U_{min}$ als das untere

Limit des für zulässigen Spannungsbereichs 0,3V beträgt, die der Position des Schwerpunkt der einfallenden Strahlung (x,y) entsprechenden analoge Ausgangssignale $A_x$ und $A_y$ wie folgt berechnet:

$$A_x = (x+1)*1,35V + 0,3V; \quad A_y = (y+1)*1,35V + 0,3V$$

Damit stehen in diesem erfindungsgemäßen Ausführungsbeispiel vier analoge Ausgangs- bzw. Ausgabespannungen als charakteristische Werte für die Bestimmung des Einfallswinkels ($A_x$ für die Position des geometrischen Strahlungsschwerpunkts in x-Richtung und $A_y$ für die Position des geometrischen Strahlungsschwerpunkts in y-Richtung) sowie für die Bestimmung der störgrößenbereinigten Strahlungsintensität der einfallenden Strahlung ($A_{PSD}$ für die Summenintensität der einfallenden Strahlung auf dem positionsempfindlichen Detektor 3 und $A_{blau}$ für die Intensität der Strahlung auf dem Dämmerungssensor 7) zur Ausgabe an externe Auswerte- und Steuerungselemente bereit. Für das hier beschriebene Ausführungsbeispiel ist das entsprechende Auswerte- und Steuerelement der Rechner der Klimaanlage. Dort wird aus den Signalen für den Schwerpunkt (x,y) der einfallenden Strahlung der Einfallswinkel der Sonnenstrahlung (Azimut und Höhenwinkel) und die störgrößenbereinigten Strahlungsintensität der einfallenden Sonnenstrahlung berechnet.

Bezugszeichenliste

1    Strahlungsrichtungssensor
2    Package
3    positionsempfindlicher Detektor
4    Avalanche-Fotodiode
5    Diodenanordnung
6    Halbleiterschicht
7    Dämmerungssensor
8    Distanzschicht
9    Blendenstruktur
10   Öffnung der Blendenstruktur
11   Halbleiterchip

**Patentansprüche**

1.  Strahlungsrichtungssensor (1) zur Bestimmung des Einfallswinkels einer Strahlungsquelle, wobei der Strahlungsrichtungssensor folgende Komponenten umfasst:

    - in einer Halbleiterschicht (6) eine Diodenanordnung (5) von Avalanche-Fotodioden (4), die in ihrer Gesamtheit einen positionsempfindlichen Detektor (3) darstellt, sowie eine anwendungsspezifische, integrierte Schaltung, allgemein als ASIC bezeichnet, zur Erzeugung von linear auswertbaren, analogen Ausgangssignalen,
    - eine transparente Schicht zur Einstellung eines Abstands, nachfolgend als Distanzschicht (8) bezeichnet,
    - eine auf der Distanzschicht (8) befindliche Blendenstruktur (9), die als definierte Öffnung (10) in einer nichttransparenten Schicht ausgebildet ist,
    - sowie Mittel zur elektrischen Anbindung des Strahlungsrichtungssensors (1).

2.  Strahlungsrichtungssensor (1) nach Anspruch 1, wobei n Paare von Avalanche-Fotodioden (4) mit n = 1, 2 , 3 usw. derart angeordnet sind, dass die Avalanche-Fotodioden (4) spiegelsymmetrisch in Bezug auf die beiden Achsen X und Y für die Positionsbestimmung der einfallenden Strahlung liegen und dass die Öffnung (10) der Blendenstruktur (9) in Abhängigkeit vom Einfallswinkel der Strahlung jeweils partiell auf den Avalanche-Fotodioden (4) dieser Diodenanordnung (5) abbildbar ist.

3.  Strahlungsrichtungssensor (1) nach Anspruch 2, wobei jede der paarweise angeordneten Avalanche-Fotodioden (4), in einem von 2n Sektoren der Diodenanordnung (5) angeordnet ist, welche sich radial und gleichmäßig verteilt um den geometrischen Mittelpunkt der Diodenanordnung (5) herum erstrecken, und wobei diese Avalanche-Fotodioden (4) über einen schmalen, isolierenden Stegbereich getrennte, optisch aktive Flächen gleicher Form, gleichen Flächeninhalts und gleichen Abstands vom Mittelpunkt der Diodenanordnung (5) aufweisen.

4. Strahlungsrichtungssensor (1) nach Anspruch 3, wobei n = 2 ist und jede der vier Avalanche-Fotodioden (4) in einem Quadranten der Diodenanordnung (5) angeordnet ist und in der Draufsicht eine Grundform haben, die sich zusammensetzt aus einem gleichseitigen Dreieck der Kantenlänge a und einem sich an eine Kantenlänge a des Dreiecks anschließendem Rechteck der Kantenlängen a und $\sqrt{(3)} / 2$ * a, und dass diese vier Avalanche-Fotodioden (4) so zueinander angeordnet sind, dass jeweils die freien Spitzen der gleichseitigen Dreiecke zueinander zeigen und die Spitzen einen solchen Abstand voneinander haben, dass ein elektrischer Durchbruch von einer Avalanche-Fotodiode (4) zur anderen unmöglich ist.

5. Strahlungsrichtungssensor (1) nach einem der vorstehenden Ansprüche, **wobei** die Öffnung (10) derart über der Diodenanordnung (5) angeordnet und in ihrer Form und Größe derart an die Form und Größe der Diodenanordnung (5) sowie die Dicke der Distanzschicht (8) angepasst ist, dass stets eine Abbildung der durch die Blendenstruktur (9) hindurchtretenden einfallenden Strahlung auf zumindest einem Teil der Diodenanordnung (5) und daraus die Ermittlung einer Position des geometrischen Strahlungsschwerpunkts dieser einfallenden Strahlung möglich ist.

6. Strahlungsrichtungssensor (1) nach einem der vorangegangenen Ansprüche, **wobei** alle lichtempfindlichen Elemente monolithisch integriert, d.h. auf einem Halbleiterchip (11) angeordnet sind.

7. Strahlungsrichtungssensor (1) nach Anspruch 6, **wobei** des Weiteren die anwendungsspezifische, integrierte Schaltung sowie die als Kontakte ausgebildeten Mittel zur elektrischen Verbindung monolithisch integriert sind.

8. Strahlungsrichtungssensor (1) nach Anspruch 6, **wobei**

   - die lichtempfindlichen Elemente auf einem ersten und die anwendungsspezifische, integrierte Schaltung auf einem zweiten Halbleiterchip angeordnet sind,
   - der zweite Halbleiterchip zum ersten Halbleiterchip dreidimensional derart integriert ist, dass er sich unter dem ersten Halbleiterchip befindet und von diesem aus kontaktiert wird und
   - die Mittel zur elektrischen Anbindung auf dem ersten und /oder auf dem zweiten Halbleiterchip angeordnet sind.

9. Strahlungsrichtungssensor nach einem der vorstehenden Ansprüche, **w**obei die Diodenanordnung zusätzliche Mittel zur Bestimmung der Summenintensität der einfallenden Strahlung enthält.

10. Strahlungsrichtungssensor (1) nach einem der vorstehenden Ansprüche, **wobei** dieser zusätzlich zum positionsempfindlichen Detektor einen Dämmerungssensor enthält.

11. Strahlungsrichtungssensor (1) nach einem der vorangegangenen Ansprüche, **wobei** die Distanzschicht aus Glas besteht, das anodisch auf die Halbleiterschicht gebondet ist.

12. Strahlungsrichtungssensor (1) nach einem der vorangegangenen Ansprüche, **wobei** die Blendenstruktur zumindest mit fotolithographischer Genauigkeit zur Fläche der Avalanche-Fotodioden positioniert ist.

13. Verfahren zur Bestimmung des Einfallswinkels einer Strahlungsquelle mittels eines Strahlungsrichtungssensors (1) (1) nach einem der vorstehenden Ansprüche, folgenden Schritte umfassend:

   - Auslesen der einzelnen Fotoströme, welche infolge von durch die Öffnung (10) der Blendenstruktur (9) auf die Diodenanordnung (5) des positionsempfindlichen Detektors (3) einfallenden Strahlung in dessen Avalanche-Fotodioden (4) erzeugt werden, durch Wandlung in Spannungen
   - Konversion der Spannungen im Strahlungsrichtungssensor (1) in zwei kontinuierliche, elektrische Signale $A_x$ und $A_y$, die der Position des geometrischen Schwerpunkts (x,y) der Strahlung entsprechen, und die sich aus dem Verhältnis der Differenzen und der Summen der in der entsprechenden x- und y-Richtung erzeugten, den jeweiligen Fotoströmen entsprechenden Spannungen berechnen:

   - $A_x$ : Position des geometrischen Strahlungsschwerpunkts in x-Richtung
   - $A_y$ : Position des geometrischen Strahlungsschwerpunkts in y-Richtung

- Berechnung des Azimuts und des Höhenwinkels aus den Signalen $A_x$ und $A_y$, die die Position des Strahlungsschwerpunkts kennzeichnen, durch Anwendung von entsprechenden Tangensbeziehungen.

**14.** Verfahren zur Bestimmung des Einfallswinkels einer Strahlungsquelle nach Anspruch 13, **wobei** der Strahlungsrichtungssensor (1) aus einer Anordnung von vier Avalanche-Fotodioden (4) besteht, von denen sich jede in einem Quadranten des dadurch erzeugten positionsempfindlichen Detektors (3) befindet und das Auslesen der in Spannungen umgewandelten Fotoströme eines positionsempfindlichen Detektors (3) sowie die Berechnung der der Position des Schwerpunkts (x,y) der einfallenden Strahlung entsprechenden elektrischen Signale $A_x$ und $A_y$ bei Einsatz eines Strahlungsrichtungssensors (1) mit vier Avalanche-Fotodioden (4) in folgenden Schritten erfolgt:

- Beschalten eines ersten Paares von sich entlang einer x-Richtung gegenüberliegenden Avalanche-Fotodioden (4), während die verbleibenden floatend gehalten werden;
- Einhalten einer Stabilisierungsphase, in der die Stabilisierung der Messbedingungen erreicht wird;
- Auslesen der Fotoströme besagten ersten Paares und Speichern der Spannungswerte als $U_I$ und $U_{III}$;
- Beschalten eines zweiten Paares von sich entlang einer y-Richtung gegenüberliegenden Avalanche-Fotodioden (4), während die verbleibenden floatend gehalten werden;
- Einhalten einer weiteren Stabilisierungsphase;
- Auslesen der Fotoströme besagten zweiten Paares und Speichern der Spannungswerte $U_2$ und $U_4$;
- Berechnung der Position (x,y) nach

$$x = (U_{III} - U_I)/(U_I + U_{III}) \text{ und}$$

$$y = (U_{II} - U_{IV})/(U_{II} + U_{IV});$$

- Berechnung der elektrischen Signale $A_x$ und $A_y$ nach

$$A_x = (x+1) * (U_{max}-U_{min})/2 + U_{min} \text{ und}$$

$$A_y = (y+1) * (U_{max}-U_{min})/2 + U_{min},$$

wobei $U_{max}$ und $U_{min}$ die obere und die untere Grenze der jeweils zulässige Spannungen der elektrischen Ausgangssignale kennzeichnen.
- Berechnung des Azimuts $\alpha$ und des Höhenwinkels $\beta$ nach

$$\alpha = \arctan \frac{2Ay - U\min - U\max}{2Ax - U\min - U\max}$$

$$\beta = \arctan \frac{1}{\sqrt{\left(\frac{2(Ax - U\min)}{U\max - U\min} - 1\right)^2 + \left(\frac{2(Ay - U\min)}{U\max - U\min} - 1\right)^2}}$$

**15.** Verfahren zur Bestimmung des Einfallswinkels einer Strahlungsquelle nach einem der Ansprüche 13 oder 14, **wobei** der Strahlungsrichtungssensor (1) zusätzliche Mittel zur Bestimmung der Summenintensität der einfallenden Strahlung enthält und damit zusätzlich zu den der Position des Schwerpunkts (x,y) der einfallenden Strahlung entsprechenden elektrischen Signalen $A_x$ und $A_y$ die Summenintensität der Strahlung $A_{PSD}$ auf dem positionsempfindlichen Detektor (3) berechnet wird.

**16.** Verfahren zur Bestimmung des Einfallswinkels einer Strahlungsquelle nach Anspruch 15, **wobei** die Berechnung der Summenintensität der Strahlung nach $A_{PSD} = (U_I + U_{II} + U_{III} + U_{IV}) / 4$ und/oder die Bestimmung der Intensität der Strahlung auf dem Dämmerungssensor (7) nach $A_{blau} = U_{blau}$ erfolgt.

**17.** Verfahren zur Bestimmung des Einfallswinkels einer Strahlungsquelle nach einem der Ansprüche 13 bis 16, **wobei** der Strahlungsrichtungssensor (1) einen Dämmerungssensor (7) enthält und damit zusätzlich zu den der Position des Schwerpunkts (x,y) der einfallenden Strahlung entsprechenden elektrischen Signalen $A_x$ und $A_y$ die Summenintensität der Strahlung auf dem positionsempfindlichen Detektor ($A_{PSD}$) und/oder die Intensität der Strahlung $A_{blau}$ auf dem Dämmerungssensor (7) berechnet wird.

**18.** Verfahren zur Bestimmung des Einfallswinkels einer Strahlungsquelle nach Anspruch 17, **wobei** die Bestimmung der Intensität der Strahlung auf dem Dämmerungssensor (7) nach $A_{blau} = U_{blau}$ erfolgt.

FIG 1

FIG 2

FIG 3

FIG 4

Lichtspot

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9417427 A